# EUROPEAN PATENT SPECIFICATION

(11) **EP 3 846 566 B1**
(45) Date of publication and mention of the grant of the patent: **14.01.2026**
(21) Application number: 18931756.3
(22) Date of filing: 30.08.2018
(51) Int. Cl.: H04W 72/23, H04W 16/14, H04W 48/12

(54) **METHOD AND DEVICE FOR INDICATING AND DETERMINING TRANSMISSION DIRECTION OF TRANSMISSION UNIT**
VERFAHREN UND VORRICHTUNG ZUR ANZEIGE UND BESTIMMUNG DER ÜBERTRAGUNGSRICHTUNG EINER ÜBERTRAGUNGSEINHEIT
PROCÉDÉ ET APPAREIL POUR INDIQUER ET DÉTERMINER UNE DIRECTION DE TRANSMISSION D'UNE UNITÉ DE TRANSMISSION

(43) Date of publication of application: 07.07.2021
(73) Proprietor: Beijing Xiaomi Mobile Software Co., Ltd., Beijing 100085 (CN)
(72) Inventor: ZHU, Yajun, Beijing 100085 (CN)
(74) Representative: Dehns Germany Partnerschaft mbB
(86) International application number: PCT/CN2018/103354
(87) International publication number: WO 2020/042116

(56) References cited:
- CN-A- 105 101 446
- CN-A- 105 578 573
- CN-A- 107 223 362
- CN-A- 108 347 307
- US-A1- 2017 041 947
- XIAOMI: "Discussion on the frame structure for NR-U", vol. RAN WG1, no. Gothenburg, Sweden; 20180820 - 20180824, 10 August 2018 (2018-08-10), XP051516589, Retrieved from the Internet <URL:http://www.3gpp.org/ftp/tsg%5Fran/WG1%5FRL1/TSGR1%5F94/Docs/R1%2D1809220%2Ezip> [retrieved on 20180810]
- INTERDIGITAL INC: "On NR-U Frame Structure", vol. RAN WG1, no. Gothenburg, Sweden; 20180820 - 20180824, 11 August 2018 (2018-08-11), XP051516455, Retrieved from the Internet <URL:http://www.3gpp.org/ftp/tsg%5Fran/WG1%5FRL1/TSGR1%5F94/Docs/R1%2D1809086%2Ezip> [retrieved on 20180811]
- MEDIATEK INC: "Design of GC PDCCH", vol. RAN WG1, no. Nagoya, Japan; 20170918 - 20170921, 12 September 2017 (2017-09-12), XP051329823, Retrieved from the Internet <URL:http://www.3gpp.org/ftp/tsg_ran/WG1_RL1/TSGR1_AH/NR_AH_1709/Docs/> [retrieved on 20170912]

## Description

### TECHNICAL FIELD

The present disclosure relates to a field of communication technology, and particularly to a method and a device for indicating and determining a transmission direction of a transmission unit, and a storage medium.

### BACKGROUND

In related arts, during the development of wireless communication systems, for unauthorized frequency bands, in the 3GPP (3rd Generation Partnership Project), a LAA (License Assisted Access) mechanism is proposed to use the unauthorized frequency bands. That is, the use of unauthorized frequency bands is realized with assistance of authorized frequency bands. In order to ensure the coexistence with other systems such as Wi-Fi on unlicensed frequency bands, LBT (Listen Before Talk) is also introduced in LAA. The transmitting terminal needs to check whether the channel is idle when there is data to be sent, and the transmitting terminal can only send data when the channel is idle. The time that the transmitting terminal can use the channel is limited by MCOT (Maximum Channel Occupancy Time). That is, after the transmitting terminal carries out one channel detection procedure and successfully obtains the channel, the maximum channel occupancy time cannot exceed the time defined by MCOT.

In the LTE system, according to differences of duplex modes, there are two operation modes: FDD (Frequency Division Duplexing) and TDD (Time Division Duplexing). For FDD mode, uplink and downlink transmissions are implemented on different carrier waves. For TDD mode, uplink and downlink transmissions are implemented on the same carrier wave. The terminal implements the uplink and downlink transmission using one configuration based on the notification of the base station.

In another wireless cellular communication system 5G NR (New Radio), it also supports dynamically indicating the transmission direction information of the transmission unit through the physical layer signaling SFI (Slot Format Indicator). The base station configures information such as the period and location of the terminal detecting the SFI through a higher layer, and the terminal obtains the information indicating the transmission direction of the transmission unit by detecting the SFI at the corresponding position.

In the current way of dynamically indicating the transmission direction of the transmission unit, the terminal needs to detect the SFI information at the pre-configured detection period and location. However, since the cellular communication system working on the unauthorized frequency band need to compete with other communication systems to use channel resources, the base station may fail to occupy the channel at the preset position for sending the SFI, and fail to send the information indicating transmission direction of the transmission unit.

As for the way to send SFI on each transmission unit, the terminal needs to detect SFI information on each transmission unit, which will result in relatively large detection overhead for the terminal. The document R1-1809086, titled "On NR-U Frame Structure", by InterDigital INc., 3GPP TSG RAN WG1 Meeting #94, provides an example of a COT Format Indicator.

### SUMMARY

In order to overcome the problems in the related art, a method and an apparatus for indicating and determining a transmission direction of a transmission unit and a storage medium are provided by the present disclosure.

According to a first aspect of the present disclosure, a method for indicating a transmission direction of a transmission unit is provided as defined by claim 1.

Optionally, the information includes second detection configuration information, and sending the information corresponding to the transmission directions of the transmission units within the MCOT to the terminal on one available symbol after occupying the unlicensed band resource includes: sending the second detection configuration information to the terminal on the first symbol after occupying the unlicensed band resource, wherein the second detection configuration information is configured to instruct the terminal to detect the indication information of the transmission directions of the transmission units on the unlicensed band resource.

Optionally, when the indication information of the transmission direction is carried by a preset signal sequence, the second detection configuration information includes a period of detecting the preset signal sequence and/or a position of the preset signal sequence in the unlicensed band resource.

According to a second aspect of the present disclosure, a method for determining a transmission direction of a transmission unit is provided as defined by claim 4.

Optionally, the information includes second detection configuration information, and receiving the information corresponding to the transmission directions of the transmission units within the MCOT sent by the network side device includes: receiving the second detection configuration information sent by the network side device, wherein the second detection configuration information is configured to instruct the terminal to detect the indication information of the transmission directions on the unlicensed band resource; detecting the indication information of the transmission direction on the unlicensed band resource according to the second detection configuration information.

Optionally, when the indication information of the transmission direction is carried by a preset signal sequence, the second detection configuration information includes a period for detecting the preset signal sequence and/or a position of the preset signal sequence in the unlicensed band resource.

According to a further aspect of the present disclosure, a device is provided according to claim 7.

Also described, but not claimed, is a non-temporary computer-readable storage medium is provided. When instructions in the storage medium are executed by a processor, the processor is enabled to implement the method described in the first aspect of the present disclosure.

The technical solutions provided by the embodiments of the present disclosure may include the following beneficial effects.

With the method for indicating the direction of the transmission unit provided by the embodiments of the present disclosure, the network side device sends the information corresponding to transmission direction of the transmission unit within the predefined time window to the terminal on one available transmission unit after occupying the unlicensed band resource, which ensures that when the network side device successfully occupies the channel resource, the information corresponding to the transmission direction of the transmission unit within the predefined time window can be sent to the terminal through this channel resource as soon as possible, thereby avoiding the problem of failing to send the transmission direction of the transmission unit within the predefined time window due to a fact that the network side device didn't occupy the channel resource.

It should be understood that, the above general description and the following detailed description are only exemplary and explanatory, and cannot limit the present disclosure.

### BRIEF DESCRIPTION OF THE DRAWINGS

The drawings herein are incorporated into the specification and constitute a part of the specification, show embodiments in conformity with embodiments of the present disclosure, and explain the principle of the present disclosure together with the specification.
Fig. 1 is a flowchart illustrating a method for indicating a transmission direction of a transmission unit according to an example embodiment.
Fig. 2 is a schematic diagram illustrating slots of MCOT according to an example embodiment.
Fig. 3 is a flowchart illustrating a method for indicating a transmission direction of a transmission unit according to an example embodiment.
Fig. 4 is a flowchart illustrating a method for indicating a transmission direction of a transmission unit according to an example embodiment.
Fig. 5 is a flowchart illustrating a method for indicating a transmission direction of a transmission unit according to an example embodiment.
Fig. 6 is a flowchart illustrating a method for determining a transmission direction of a transmission unit according to an example embodiment.
Fig. 7 is a flowchart illustrating a method for determining a transmission direction of a transmission unit according to an example embodiment.
Fig. 8 is a flowchart illustrating a method for determining a transmission direction of a transmission unit according to an example embodiment.
Fig. 9 is a flowchart illustrating a method for determining a transmission direction of a transmission unit according to an example embodiment.
Fig. 10 is a block diagram illustrating an apparatus for indicating a transmission direction of a transmission unit according to an example embodiment.
Fig. 11 is a block diagram illustrating an apparatus for indicating a transmission direction of a transmission unit according to an example embodiment.
Fig. 12 is a block diagram illustrating an apparatus for indicating a transmission direction of a transmission unit according to an example embodiment.
Fig. 13 is a block diagram illustrating an apparatus for indicating a transmission direction of a transmission unit according to an example embodiment.
Fig. 14 is a block diagram illustrating an apparatus for determining a transmission direction of a transmission unit according to an example embodiment.
Fig. 15 is a block diagram illustrating an apparatus for indicating a transmission direction of a transmission unit according to an example embodiment.
Fig. 16 is a block diagram illustrating an apparatus for determining a transmission direction of a transmission unit according to an example embodiment.
Fig. 17 is a block diagram illustrating an apparatus for determining a transmission direction of a transmission unit according to an example embodiment.
Fig. 18 is a block diagram illustrating a device for determining a transmission direction of a transmission unit according to an example embodiment.
Fig. 19 is a block diagram illustrating an apparatus for indicating a transmission direction of a transmission unit according to an example embodiment.

### DETAILED DESCRIPTION

The exemplary embodiments will be described in detail here, and examples are shown in the appended drawings. When the following descriptions refer to the accompanying drawings, unless otherwise indicated, the same numbers in different drawings represent the same or similar elements. The implementations described in the following example embodiments do not represent all the implementations consistent with the present invention. Rather, they are merely examples of the apparatus and method consistent with some aspects of the present invention as detailed in the appended claims.

The MCOT involved in this disclosure is configured to limit the time the data transmitting terminal uses the channel. That is, after the transmitting terminal carries out one channel detection procedure and successfully acquires the channel, the maximum channel occupancy time cannot exceed the time defined by MCOT.

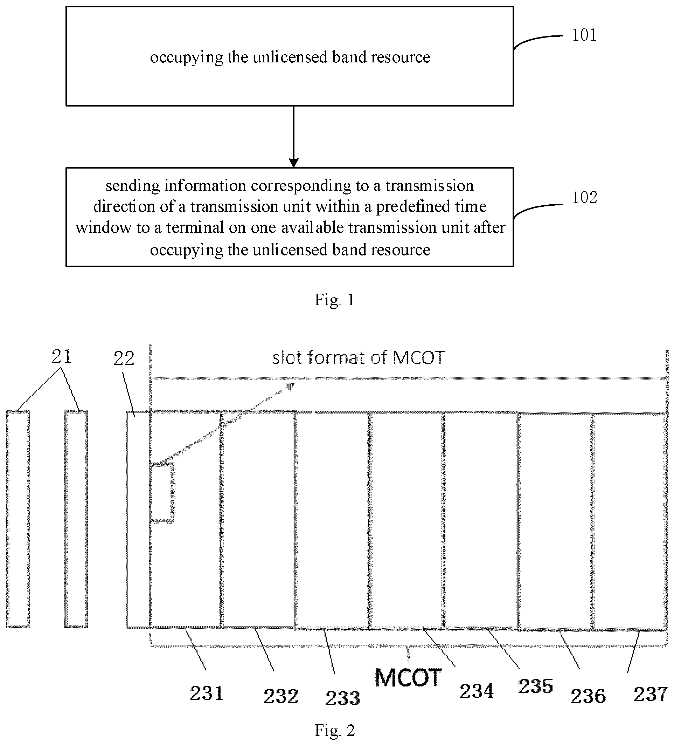

Fig. 1 is a flowchart illustrating a method for indicating a transmission direction of a transmission unit according to an example embodiment. The method can be applied to a network side device, such as a base station. As illustrated in Fig. 1, the method includes the following blocks.

In block 101, unlicensed band resource is occupied.

In block 102, information corresponding to a transmission direction of a transmission unit within a predefined time window is sent to a terminal on one available transmission unit after the unlicensed band resource is occupied. The one available transmission unit may be the first transmission unit within the predefined time window or other transmission unit within the predefined time window. When the available transmission unit is the first transmission unit within the predefined time window, the time for the terminal to obtain the information corresponding to the transmission direction of the transmission unit can be further shorten.

One transmission unit may be one slot, one symbol (as claimed), ol, one sub-frame, one radio frame or other transmission unit in time domain.

In a possible implementation, the above predefined time window is one MCOT. Fig. 2 is a schematic diagram of MCOT according to an example embodiment. In Fig. 2, the transmission unit takes slot as an example. 21 indicates the failure of the LBT, while 22 indicates the success of the LBT. After the success of LBT, i.e. the network side device successfully occupies the unlicensed band resource, 231 indicates the first slot after the network side device successfully occupies the unlicensed band resource and 232-237 are respectively other slots in the MCOT.

In a possible implementation, the information corresponding to the transmission direction of the transmission unit within the predefined time window is sent to the terminal at a preset time frequency position of one available transmission unit after occupying the unlicensed band resource. The preset time frequency position may be notified to the terminal in advance by the network side device, or may be agreed in advance between the network side device and the terminal.

In a possible implementation, the network side device may send the information corresponding to the transmission direction of the transmission unit within the predefined time window to the terminal on one available transmission unit described above.

In a possible implementation, the information corresponding to the transmission direction of the transmission unit within the predefined time window may include, for example, indication information of the transmission direction of the transmission unit within the predefined time window, and the indication information may be configured to indicate the transmission direction of the transmission unit, while in another possible implementation, the information corresponding to transmission direction of the transmission unit within the predefined time window may include, for example, configuration information for instructing the terminal to detect the indication information of the transmission direction of the transmission unit on the unlicensed band resource. The configuration information is hereinafter referred to as the detection configuration information for short.

With the method for indicating the transmission direction of the transmission unit provided by the embodiments of the present disclosure, the information corresponding to transmission direction of the transmission unit within the predefined time window is sent to the terminal on one available transmission unit after the unlicensed band resource is occupied by the network side device, which ensures that when the network side device successfully occupies the channel resource, the information corresponding to transmission direction of the transmission unit within the predefined time window can be sent to the terminal through this channel resource as soon as possible, so that the terminal device can obtain the information of the transmission direction as soon as possible.

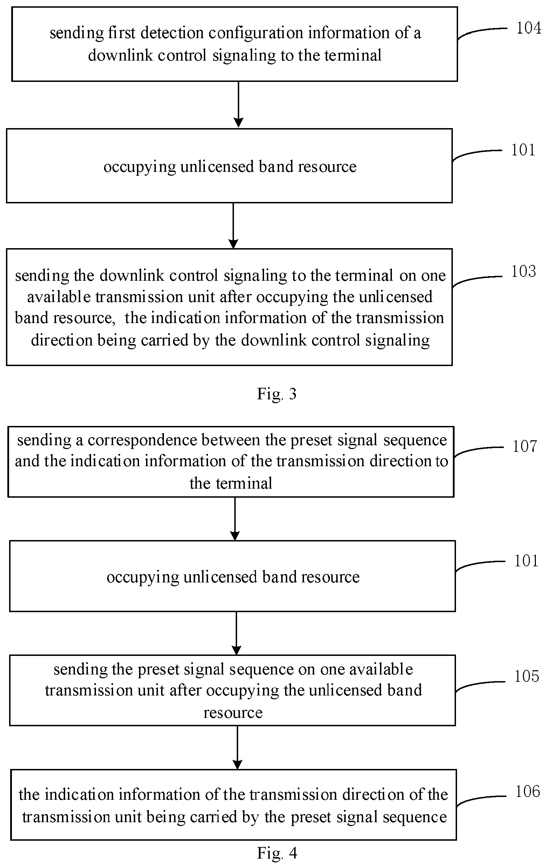

In a possible implementation, the information corresponding to the transmission direction of the transmission unit includes at least one of uplink, downlink, or unknown, and the indication information may also include respective identifications of transmission units, and each identification may correspond to the transmission direction of the transmission unit identified. For example, the transmission direction corresponding to the identification 1 is uplink, which means the transmission direction of the transmission unit identified by the identification 1 is uplink, and the transmission direction corresponding to the identification 2 is downlink, which means the transmission direction of the transmission unit identified by the identification 2 is downlink, and the transmission direction corresponding to the identification 3 is unknown, which means the transmission direction of the transmission unit identified by the identification 3 is unknown. Fig. 3 is a flowchart illustrating a method for indicating a transmission direction of a transmission unit according to an example embodiment. As illustrated in Fig. 3, in this method, sending information corresponding to the transmission direction of the transmission unit within the predefined time window to the terminal on one available transmission unit after the unlicensed band resource is occupied may include: in block 103, sending a downlink control signaling to the terminal on one available transmission unit after the unlicensed band resource is occupied, the indication information of the transmission direction being carried by the downlink control signaling. The terminal may detect the downlink control signaling on the unlicensed band, and acquire the transmission direction of each transmission unit within the predefined time window based on the indication information of the transmission direction of the transmission unit carried by the downlink signaling, thereby saving the overhead for the terminal to detect the downlink control signaling.

In a possible implementation, in accordance with the claims, in order to reduce the complexity for the terminal to detect the downlink control signaling carrying the indication information of the transmission direction of the transmission unit, the network side device sends the detection configuration information of the downlink control signaling to the terminal through predefining or by sending a signaling to the terminal. As illustrated in Fig. 3, based on the method shown in Fig. 1, this method may further include: in block 104, sending first detection configuration information of the downlink control signaling to the terminal. The first detection configuration information includes at least the following information: the aggregation level of the downlink control signaling, and optionally the information length of the downlink control signaling, the position of the downlink control signaling on the unlicensed band resource, and the number of times to detect the downlink control signaling. Block 104 may be executed before or after block 101. Fig.3 only shows a case where block 104 is executed before block 101. In this embodiment, the information length of the downlink control signaling may be fixed or variable. When the information length of the downlink control signaling is variable, the base station may flexibly adjust the information length of the downlink control signaling according to the number of transmission units within the predefined time window.

In a possible implementation, the information corresponding to the transmission direction of the transmission unit may include indication information of the transmission direction, and the indication information of the transmission direction may include at least one of uplink, downlink, or unknown. Fig. 4 is a flowchart illustrating a method for indicating a transmission direction of a transmission unit according to an example embodiment. sending the information corresponding to the transmission direction of the transmission unit to the terminal on one available transmission unit after occupying the unlicensed band resource may include: in block 105, sending a preset signal sequence on one available transmission unit after occupying the unlicensed band resource; in block 106, carrying the indication information of the transmission direction of the transmission unit on the preset signal sequence. The preset signal sequence is, for example, a character sequence composed of letters and/or numbers. For example, one character sequence may uniquely identify one of uplink, downlink, and unknown transmission directions. When the terminal learns in advance the correspondence between the preset signal sequence and the indication information of the transmission direction of the transmission unit, the terminal may obtain the transmission direction of the transmission unit after learning the preset signal sequence, thereby saving the overhead for the terminal to detect the downlink control signaling.

In a possible implementation, as illustrated in Fig. 4, the method for indicating the transmission direction of the transmission unit may further include: in block 107, sending the correspondence between the preset signal sequence and the indication information of the transmission direction to the terminal. For example, the network side device and the terminal may agree on the correspondence between the preset signal sequence and the indication information of the transmission information of the transmission unit in advance, or the network side device may notify the terminal in advance of the correspondence between the preset signal sequence and the indication information of the transmission direction of the transmission unit. The network side device may send a preset signal on a preset time-frequency resource on one available transmission unit. The preset signal may carry indication information of the transmission direction of the transmission units within the entire predefined time window. Before this, the network side device may also pre-define or send the correspondence between the preset signal sequence and the direction indication information through signaling. The network side device may select the corresponding preset signal sequence and send it on the preset time domain resource based on the indication information of the transmission direction of the transmission unit within the predefined time window. After the terminal detects the preset signal sequence, the terminal may obtain the indication information of the transmission direction of the transmission unit within the predefined time window by comparing the preset signal sequence with the correspondence between the preset signal sequence and direction indication information that is pre-defined or that the base station notifies the terminal through signaling, thereby saving the overhead for the terminal to detect the downlink control signaling. Block 107 may be executed before block 101 or after block 101. Fig. 4 only shows a case where block 107 is executed before block 101.

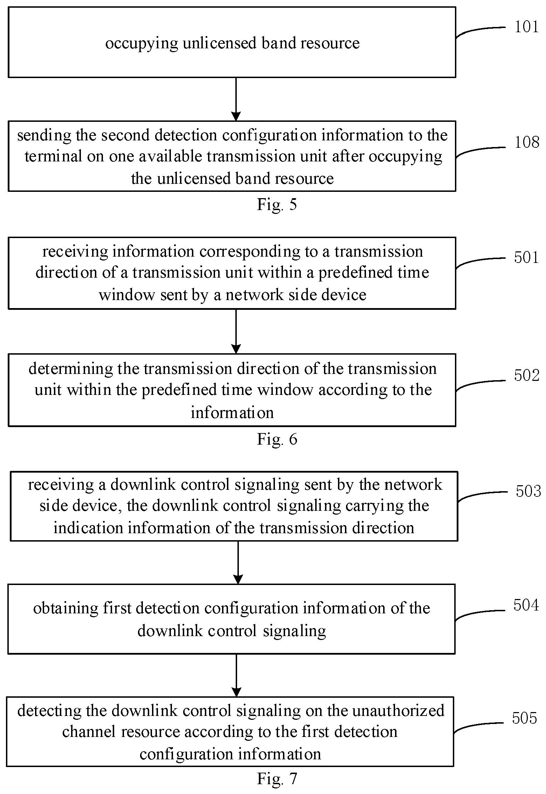

In a possible implementation, the information corresponding to the transmission direction of the transmission unit may include second detection configuration information, and the second detection configuration information may be configured to instruct the terminal to detect the indication information of the transmission direction of the transmission unit on the unlicensed band resource. Fig. 5 is a flowchart illustrating a method for indicating a transmission direction of a transmission unit according to an example embodiment. As illustrated in Fig. 5, in this method, sending the information corresponding to the transmission direction of the transmission unit within the predefined time window to the terminal on one available transmission unit after occupying the unlicensed band resource may include: in block 108, sending the second detection configuration information to the terminal on one available transmission unit after occupying the unlicensed band resource. For example, the network side device sends the detection configuration information indicating the transmission direction information of the transmission unit on the preset time-frequency resource on one available transmission unit after successfully occupying the unlicensed band. The detection configuration information may include information indicating how the terminal to detect the transmission direction of the transmission unit. Based on the detection configuration information, the terminal may detect the indication information of the transmission direction of the transmission unit at the corresponding position on the unlicensed band resource, thereby saving the overhead for the terminal to detect the downlink control signaling.

In a possible implementation, based on the method in Fig. 5, when the indication information of the transmission direction of the transmission unit is carried by the downlink control signaling, the second detection configuration information may include at least one of the following information: the aggregation level of downlink control signaling, the information length of the downlink control signaling, the position of the downlink control signaling on the unlicensed band resource, and the number of times to detect the downlink control signaling. After receiving the second detection configuration information sent by the network side device, the terminal may detect the indication information of the transmission direction of the transmission unit on the unlicensed band resource according to at least one information included in the information, so as to learn the transmission direction of the transmission unit according to the indication information of the transmission unit detected, thereby saving the overhead for the terminal to detect the downlink control signaling. The network side device may send the detection configuration information of the downlink control signaling to the terminal through predefining or through signaling.

In a possible implementation, based on the method in Fig. 5, when the indication information of the transmission direction is carried by a preset signal sequence, the second detection configuration information may include the period for detecting the preset signal sequence and/or the position of the preset signal sequence in the unlicensed band resource. After receiving the second detection configuration information sent by the network side device, the terminal may detect the indication information of the transmission direction of the transmission unit on the unlicensed band resource based on the period of the preset signal sequence and/or the position of the preset signal sequence in the unlicensed band resource included in the information. The terminal may obtain the transmission direction of the transmission unit according to the indication information detected and the correspondence between the preset signal sequence and the indication information of the transmission direction of the transmission unit, thereby saving the overhead for the terminal to detect the downlink control signaling.

Fig. 6 is a flowchart illustrating a method for determining a transmission direction of a transmission unit according to an example embodiment. The method may be applied to a terminal. As illustrated in Fig. 6, the method includes the following blocks.

In block 501, information corresponding to a transmission direction of a transmission unit within a predefined time window sent by a network side device is received. The information is sent by the network side device on one available transmission unit after occupying the unlicensed band resource.

In a possible implementation, the network side device may send the information corresponding to the transmission direction of the transmission unit within the predefined time window to the terminal at a preset time-frequency position of one available transmission unit after occupying the unlicensed band resource. The preset time-frequency position may be notified to the terminal in advance by the base station, or may be agreed in advance by the base station and the terminal.

The predefined time window may be one MCOT.

In a possible implementation, the terminal receives the information corresponding to the transmission directions of all the transmission units within the predefined time window sent by the network side device.

In block 502, the transmission direction of the transmission unit within the predefined time window is determined according to the information.

In a possible implementation, the information corresponding to the transmission direction of the transmission unit within the predefined time window may include, for example, indication information of the transmission direction of the transmission unit within the predefined time window. The indication information may be configured to indicate the transmission direction of the transmission unit. After acquiring the indication information, the terminal may learn the transmission direction of the transmission unit. In another possible implementation, the information corresponding to the transmission direction of the transmission unit within the predefined time window may include, for example, the configuration information for instructing the terminal to detect the indication information of the transmission direction of the transmission unit on the unlicensed band resource. The configuration information is hereinafter referred to as detection configuration information for short. After acquiring the detection configuration, the terminal learns how to detect the indication information of the transmission direction of the transmission unit on the unlicensed band resource, thereby saving the overhead for the terminal to detect the downlink control signaling.

With the method for determining the direction of the transmission unit provided by the embodiment of the present disclosure, the terminal receives the information corresponding to the transmission direction of the transmission unit within the predefined time window sent by the network side device on one available transmission unit after occupying the unlicensed band resource, which can ensure that when the network side device successfully occupies the channel resource, the information corresponding to the transmission direction of the transmission unit within the predefined time window can be sent to the terminal through this channel resource, so that the terminal can obtain the transmission direction of the transmission unit conveniently and efficiently, avoiding problems of failing to send the transmission direction of the transmission unit within the predefined time window due to a fact that the network side device didn't occupy the channel resource.

In a possible implementation, the information corresponding to the transmission direction of the transmission unit may include indication information of the transmission direction, and the indication information of the transmission direction may include at least one of uplink, downlink, or unknown. Fig. 7 is a flowchart illustrating a method for determining a transmission direction of a transmission unit according to an example embodiment. As illustrated in Fig. 7, in this method, receiving the information corresponding to the transmission direction of the transmission unit within the predefined time window sent by the network side device may include: in block 503, receiving the downlink control signaling sent by the network side device, the indication information of the transmission direction being carried by the downlink control signaling. For example, the terminal may detect the downlink control signaling on the unlicensed band according to the detection configuration information corresponding to the downlink control signaling sent by the network side device, and thus may acquire the transmission direction of the transmission unit within the predefined time window based on the indication information of the transmission direction of the transmission unit carried by the downlink signaling, thereby saving the overhead for the terminal to detect the downlink control signaling.

In a possible implementation, as illustrated in Fig. 7, the method for determining the transmission direction of the transmission unit may further include, in block 504, obtaining first detection configuration information of the downlink control signaling, in which the first detection configuration information includes at least one of the following information: the aggregation degree of the downlink control signaling, the length of the indication information of the transmission direction, the position of the downlink control signaling on the unlicensed band resource, and the number of times to detect the downlink control signaling; and in block 505, detecting the downlink control signaling on the unlicensed band resource according to the first detection configuration information. After the terminal detects the downlink control signaling carrying the indication information of the transmission direction of the transmission unit on the unlicensed band, the terminal may learn the transmission direction of the transmission unit according to the indication information, thereby saving the overhead for the terminal to detect the downlink control signaling. Block 503 may be executed before or after block 504. Fig. 7 only shows a case where block 503 is executed before block 504.

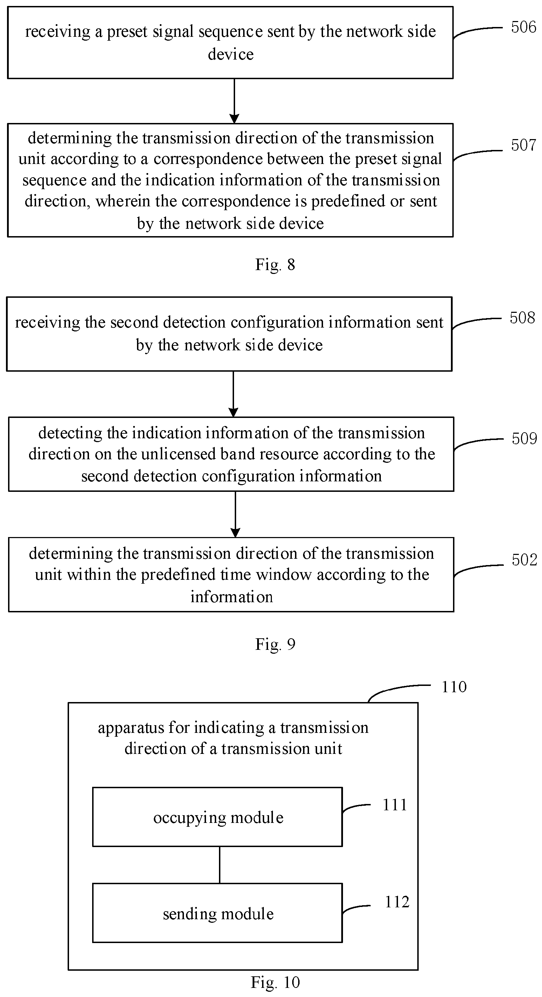

In a possible implementation, the information may include indication information of the transmission direction, and the indication information of the transmission direction may include at least one of uplink, downlink, or unknown. Fig. 8 is a flowchart illustrating a method for determining a transmission direction of a transmission unit according to an example embodiment. As illustrated in Fig. 8, in the method, receiving the information corresponding to transmission direction of the transmission unit within the predefined time window sent by the network side device may include, in block 506, receiving a preset signal sequence sent by the network side device, the indication information of the transmission direction being carried by the preset signal sequence. For example, the network side device and the terminal may agree on the correspondence between the preset signal sequence and the indication information of the transmission direction of the transmission unit in advance, or the network side device may send the correspondence between the preset signal sequence and the indication information of the transmission direction of the transmission unit to the terminal in advance. The terminal may detect the preset signal sequence on the unlicensed band according to the detection configuration information notified by the network side device and acquire the transmission direction of the transmission unit based on the correspondence between the preset signal sequence and the transmission direction of the transmission unit.

In a possible implementation, as illustrated in Fig. 8, determining the transmission direction of the transmission unit within the predefined time window according to the information may include: in block 507, determining the transmission direction of the transmission unit according to the correspondence between the preset signal sequence and the indication information of the transmission direction which is predefined or sent by the network side device. For example, the network side device sends the correspondence between the preset signal sequence and the indication information of the transmission direction of the transmission unit to the terminal in advance. In this correspondence, the signal sequence 0000 indicates uplink, the signal sequence 1111 indicates downlink, and 1100 indicates unknown. When the terminal receives the preset signal sequence 0000, the terminal learns that the transmission direction of the current transmission unit is uplink according to the previously saved correspondence between the preset signal sequence and the transmission direction of the transmission unit.

In a possible implementation, the information may include second detection configuration information. Fig. 9 is a flowchart illustrating a method for determining the transmission direction of the transmission unit according to an example embodiment. As illustrated in Fig. 9, in this method, receiving the information corresponding to the transmission direction of the transmission unit within the predefined time window sent by the network side device may include: in block 508, receiving the second detection configuration information sent by the network-side device, in which the second detection configuration information is configured to instruct the terminal to detect the indication information of the transmission direction on the unlicensed band resource; in block 509, detecting the indication information of the transmission direction on the unlicensed band resource according to the second detection configuration information. The detection configuration information may include information indicating the way the terminal detects the transmission direction of the transmission unit. Based on the detection configuration information, the terminal may detect the indication information of the transmission direction of the transmission unit at the corresponding position on the unlicensed band resource, so as to know the transmission direction of the transmission unit, thereby saving the overhead for the terminal to detect the downlink control signaling.

In a possible implementation, based on the method shown in Fig. 9, when the indication information of the transmission direction is carried by downlink control signaling, the second detection configuration information may include at least one of the following information:
the aggregation level of the downlink control signaling, the information length of the downlink control signaling, the position of the downlink control signaling on the unlicensed band resource, and the number of times to detect the downlink control signaling.

The terminal may use at least one of the above information to detect the downlink control signaling carrying the indication information of the transmission direction of the transmission unit on the unlicensed band, so as to learn the transmission direction of the transmission unit according to the indication information, thereby saving the overhead for the terminal to detect the downlink control signaling.

In a possible implementation, based on the method shown in Fig. 9, when the indication information of the transmission direction is carried by a preset signal sequence, the second detection configuration information includes the period for detecting the preset signal sequence and/or the position of the preset signal sequence in the unlicensed band resource. The terminal may detect the preset signal sequence carrying the indication information of the transmission direction of the transmission unit on the unlicensed band according to the period of the preset signal sequence and/or the position of the preset signal sequence in the unlicensed band resource, so as to acquire the transmission direction of the transmission unit according to the indication information, thereby saving the overhead for the terminal to detect the downlink control signaling.

Fig. 10 is a block diagram illustrating an apparatus for indicating a transmission direction of a transmission unit according to an example embodiment. The apparatus is applied to a network side device. As illustrated in Fig. 10, the apparatus 110 includes an occupying module 111 and a sending module 112.

The occupying module 111 is configured to occupy unlicensed band resource.

The sending module 112 is configured to send information corresponding to the transmission direction of the transmission unit within a time window predefined by the maximum channel occupation time to a terminal on one available transmission unit after the unlicensed band resource is occupied.

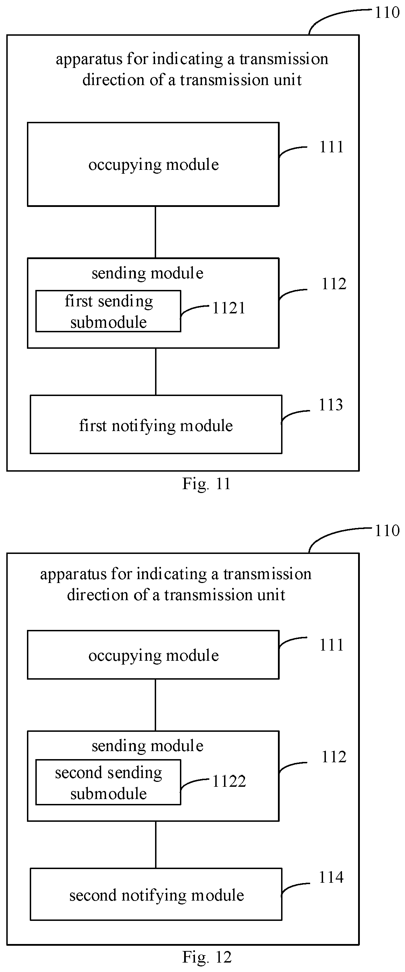

In a possible implementation, the information may include indication information of the transmission direction, and the indication information of the transmission direction includes at least one of uplink, downlink, or unknown. Fig. 11 is a block diagram illustrating an apparatus for indicating a transmission direction of a transmission unit according to an example embodiment. As illustrated in Fig. 11, the sending module 112 of the apparatus may include a first sending submodule 1121. The first sending submodule 1121 is configured to send a downlink control signaling to the terminal on one available transmission unit after the unlicensed band resource is occupied, the indication information of the transmission direction being carried by the downlink control signaling.

In a possible implementation, as illustrated in Fig. 11, the apparatus 110 may further include a first notifying module 113. The first notifying module 113 is configured to send first detection configuration information of the downlink control signaling to the terminal. The first detection configuration information includes at least one of the following information: the aggregation level of the downlink control signaling, the information length of the downlink control signaling, and the position of the downlink control signaling on the unlicensed band resource, and the number of times to detect the downlink control signaling.

In a possible implementation, the information may include indication information of the transmission direction, and the indication information of the transmission direction includes at least a kind of uplink, downlink, or unknown. Fig. 12 is a block diagram illustrating an apparatus for indicating a transmission direction of a transmission unit according to an example embodiment. As illustrated in Fig. 12, in the apparatus, the sending module 112 may include a second sending submodule 1122. The second sending submodule 1122 is configured to send a preset signal sequence on one available transmission unit after the unlicensed band resource is occupied, the indication information of the transmission direction of the transmission unit being carried by the preset signal sequence.

In a possible implementation, as illustrated in Fig. 12, the apparatus may further include a second notifying module 114. The second notifying module 114 is configured to send the correspondence between the preset signal sequence and the indication information of the transmission direction to the terminal.

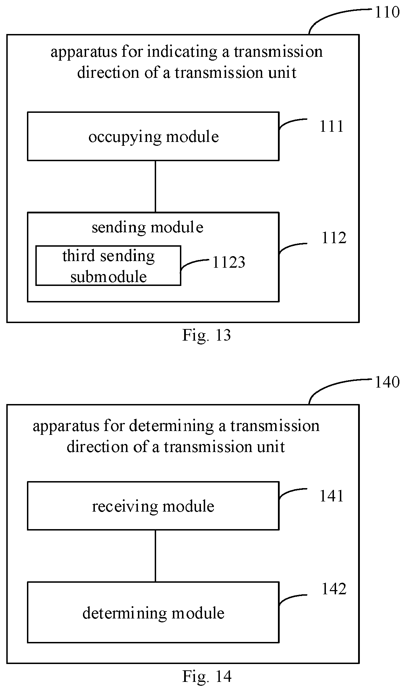

In a possible implementation, the information may include second detection configuration information. Fig. 13 is a block diagram illustrating an apparatus for indicating a transmission direction of a transmission unit according to an example embodiment. As illustrated in Fig. 13, in this apparatus, the sending module 112 may include a third sending submodule 1123. The third sending submodule 1123 is configured to send the second detection configuration information to the terminal on one available transmission unit after the unlicensed band resource is occupied, in which the second detection configuration information is configured to instruct the terminal to detect the indication information of the transmission direction of the transmission unit on the unlicensed band resource.

In a possible implementation, when the indication information of the transmission direction is carried by a downlink control signaling, the second detection configuration information includes at least one of the following information: the aggregation level of the downlink control signaling, the information length of the downlink control signaling, the position of the downlink control signaling on the unlicensed band resource, and the number of times to detect the downlink control signaling.

In a possible implementation, when the indication information of the transmission direction is carried by a preset signal sequence, the second detection configuration information includes the period of detecting the preset signal sequence and/or the position of the preset signal sequence in the unlicensed band resource.

Fig. 14 is a block diagram illustrating an apparatus for determining a transmission direction of a transmission unit according to an example embodiment. The apparatus is applied to a terminal. As illustrated in Fig. 14, the apparatus 140 includes a receiving module 141 and a determining module 142.

The receiving module 141 is configured to receive information corresponding to a transmission direction of a transmission unit within a time window predefined by the maximum channel occupation time sent by a network side device. The information is sent by the network side device on one available transmission unit after the unlicensed band resource is occupied.

The determining module 142 is configured to determine the transmission direction of the transmission unit within the predefined time window according to the information.

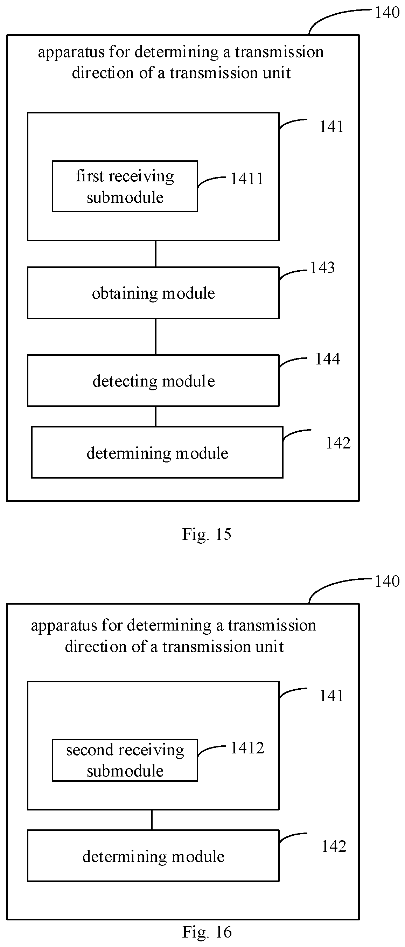

In a possible implementation, the information includes indication information of the transmission direction, and the indication information of the transmission direction includes at least one of uplink, downlink, or unknown. Fig. 15 is a block diagram illustrating an apparatus for determining a transmission direction of a transmission unit according to an example embodiment. As illustrated in Fig. 15, in the apparatus, the receiving module 141 may include a first receiving submodule 1411. The first receiving submodule 1411 is configured to receive a downlink control signaling sent by the network side device, the indication information of the transmission direction being carried by the downlink control signaling.

In a possible implementation, as illustrated in Fig. 15, the apparatus may further include an obtaining module 143 and a detecting module. The obtaining module 143 is configured to obtain the first detection configuration information of the downlink control signaling. The first detection configuration information includes at least one of the following information: the aggregation level of the downlink control signaling, the length of the indication information of the transmission direction, the position of the downlink control signaling on the unlicensed band resource, and the number of times to detect the downlink control signaling. The detecting module 144 is configured to detect the downlink control signaling on the unlicensed band resource according to the first detection configuration information.

In a possible implementation, the information includes indication information of the transmission direction, and the indication information of the transmission direction includes at least one of uplink, downlink, or unknown. Fig. 16 is a block diagram illustrating an apparatus for determining a transmission direction of a transmission unit according to an example embodiment. As illustrated in Fig. 16, the receiving module 141 may include a second receiving submodule 1412. The second receiving submodule 1412 is configured to receive a preset signal sequence sent by the network side device, the indication information of the transmission direction being carried by the preset signal sequence.

In a possible implementation, the determining module may be configured to determine transmission direction of the transmission unit according to the correspondence between the preset signal sequence and the indication information of the transmission direction that is predefined or sent by the network side device.

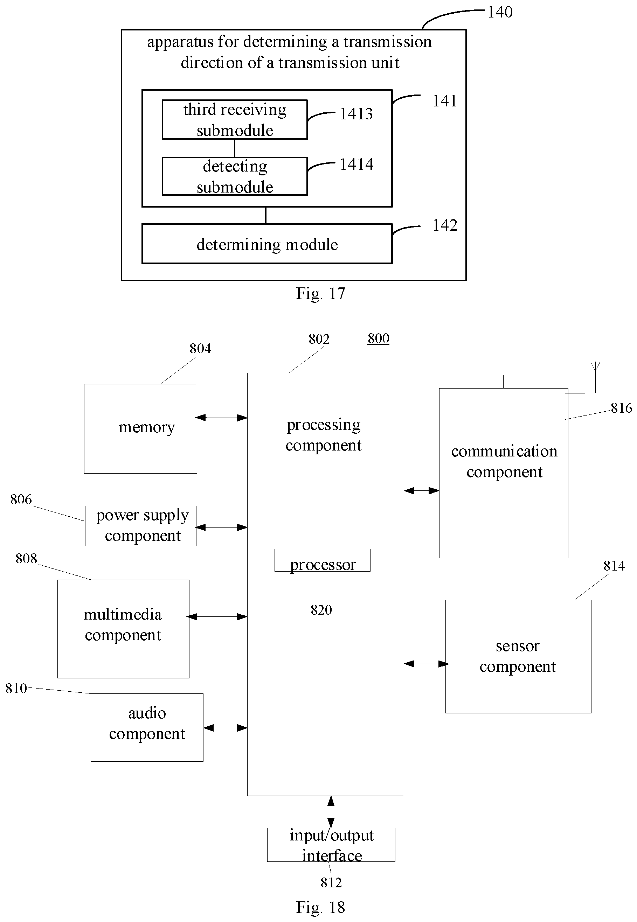

In a possible implementation, the information may include second detection configuration information. Fig. 17 is a block diagram illustrating an apparatus for determining a transmission direction of a transmission unit according to an example embodiment. As illustrated in Fig. 17, the receiving module 141 may include a third receiving submodule 1413 and a detecting submodule 1414.

The third receiving submodule 1413 is configured to receive the second detection configuration information sent by the network side device, in which the second detection configuration information is configured to instruct the terminal to detect the indication information of the transmission direction on unlicensed band resource.

The detecting submodule 1414 is configured to detect the indication information of the transmission direction on the unlicensed band resource according to the second detection configuration information.

In a possible implementation, when the indication information of the transmission direction is carried by the downlink control signaling, the second detection configuration information includes at least one of the following information:
the aggregation level of the downlink control signaling, the information length of the downlink control signaling, the position of downlink control signaling in the unlicensed band resource and the number of times to detect the downlink control signaling.

In a possible implementation, when the indication information of the transmission direction is carried by a preset signal sequence, the second detection configuration information includes the period of detecting the preset signal sequence and/or the position of the preset signal sequence on the unlicensed band resource.

Regarding to the apparatus in the above embodiments, the specific manners in which each module performs operations has been described in detail in the embodiments of the method, and will not be elaborated here.

Fig. 18 is a block diagram illustrating a device for determining a transmission direction of a transmission unit according to an example embodiment. For example, the device 800 may be a mobile phone, a computer, a digital broadcasting terminal, a messaging device, a game console, a tablet device, a medical device, a fitness device, a personal digital assistant, etc. Referring to Fig. 18, the device 800 may include one or more of the following components: a processing component 802, a memory 804, a component 806, a multimedia component 808, an audio component 810, an input/output (I/O) interface 812, a sensor component 814, and a communication component 816. The processing component 802 generally controls the overall operations of the device 800, such as operations associated with display, telephone calls, data communications, camera operations, and recording operations. The processing component 802 may include one or more processors 820 to execute instructions to implement all or part of the steps of the foregoing method. In addition, the processing component 802 may include one or more modules to facilitate the interaction between the processing component 802 and other components. For example, the processing component 802 may include a multimedia module to facilitate the interaction between the multimedia component 808 and the processing component 802. The memory 804 is configured to store various types of data to support the operation of the device 800. Examples of such data include instructions for any application or method executed by on the device 800, contact data, phone book data, messages, pictures, videos, etc. The memory 804 can be implemented by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk. The power supply component 806 provides power to various components of the device 800. The power supply component 806 may include a power management system, one or more power supplies, and other components associated with the generation, management, and distribution of power for the device 800.

The multimedia component 808 includes a screen that provides an output interface between the device 800 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, sliding, and gestures on the touch panel. The touch sensor can not only sense the boundary of a touch or slide action, but also detect the duration and pressure related to the touch or slide operation. In some embodiments, the multimedia component 808 includes a front camera and/or a rear camera. When the device 800 is in an operation mode, such as a shooting mode or a video mode, the front camera and/or the rear camera can receive external multimedia data. Each front camera and rear camera can be a fixed optical lens system or have a focal length and optical zoom capabilities.

The audio component 810 is configured to output and/or input audio signals. For example, the audio component 810 includes a microphone (MIC). When the device 800 is in an operating mode, such as a call mode, a recording mode, and a voice recognition mode, the microphone is configured to receive external audio signals. The received audio signal may be further stored in the memory 804 or transmitted via the communication component 816. In some embodiments, the audio component 810 further includes a speaker for outputting audio signals. The I/O interface 812 provides an interface between the processing component 802 and the peripheral interface module. The peripheral interface module may be a keyboard, a click wheel, a button, and so on. These buttons may include but are not limited to: a home button, a volume button, a start button, and a lock button. The sensor component 814 includes one or more sensors for providing the device 800 with various aspects of state assessment. For example, the sensor component 814 can detect the on/off state of the device 800 and the relative positioning of components, such as the display and keypad of the device 800. The sensor component 814 can also detect the position change of the device 800 or a component of the device 800, whether a user contacts with the device 800, the orientation or acceleration/deceleration of the device 800, and the temperature change of the device 800. The sensor component 814 may include a proximity sensor configured to detect the presence of nearby objects when there is no physical contact. The sensor component 814 may also include a light sensor, such as a CMOS or CCD image sensor, for use in imaging applications. In some embodiments, the sensor component 814 may also include an acceleration sensor, a gyroscope sensor, a magnetic sensor, a pressure sensor or a temperature sensor. The communication component 816 is configured to facilitate wired or wireless communication between the device 800 and other devices. The device 800 can access a wireless network based on a communication standard, such as Wi-Fi, 2G, or 3G, or a combination thereof. In an exemplary embodiment, the communication component 816 receives a broadcast signal or broadcast related information from an external broadcast management system via a broadcast channel. In an exemplary embodiment, the communication component 816 further includes a near field communication (NFC) module to facilitate short-range communication. For example, the NFC module can be implemented based on a radio frequency identification (RFID) technology, an infrared data association (IrDA) technology, an ultra-wideband (UWB) technology, a Bluetooth (BT) technology and other technologies.

In an exemplary embodiment, the device 800 may be implemented by one or more Application Specific Integrated Circuits (ASIC), Digital Signal Processors (DSP), Digital Signal Processing Devices (DSPD), Programmable Logic Devices (PLD), Field-Programmable Gate Array (FPGA), controller, micro-controller, microprocessor, or other electronic components, for performing the above methods.

In an exemplary embodiment, there is also provided a non-transitory computer-readable storage medium including instructions, such as the memory 804 including instructions, which may be executed by the processor 820 of the device 800 to implement the above methods. For example, the non-transitory computer-readable storage medium may be a Read-Only Memory (ROM), a Random Access Memory (RAM), a CD-ROM, a magnetic tape, a floppy disk, an optical data, a storage device, etc.

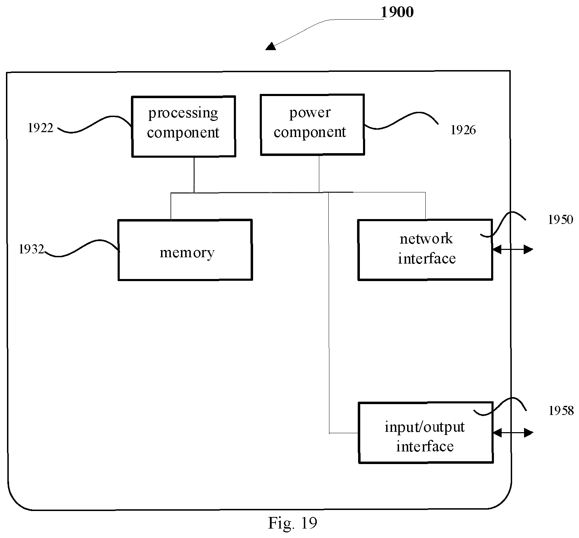

Fig. 19 is a block diagram illustrating a device for determining a transmission direction of a transmission unit according to an example embodiment. For example, the device 1900 may be provided as a server. Referring to the Fig. 19, the device 1900 includes a processing component 1922, which further includes one or more processors, and memory resources represented by the memory 1932 for storing instructions executable by the processing component 1922, such as application programs. The applications stored in the memory 1932 may include one or more modules, in which each corresponds to a set of instructions. In addition, the processing component 1922 is configured to execute instructions to implement the above method for determining a transmission direction of a transmission unit. The device 1900 may further include a power component 1926 configured to perform power management of the device 1900, a wired or wireless network interface 1950 configured to connect the device 1900 to the network, and an input/output (I/O) interface 1958. The device 1900 can operate based on an operating system stored in the memory 1932, such as WindowsServerTM, MacOSXTM, UnixTM, LinuxTM, FreeBSDTM. In an exemplary embodiment, there is also provided a non-transitory computer-readable storage medium including instructions, such as the memory 1932 including instructions, which can be executed by the processing component 1922 of the device 1900 to complete the above method. For example, the non-transitory computer-readable storage medium may be a ROM, a Random Access Memory (RAM), a CD-ROM, a magnetic tape, a floppy disk, an optical data storage device, etc.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

It will be appreciated that the present invention is not limited to the exact construction that has been described above and illustrated in the accompanying drawings and that various modifications and changes can be made without departing from the scope thereof. It is intended that the scope of the invention only be limited by the appended claims.

## Claims

1. A method for indicating a transmission direction of a transmission unit, applied to a network side device, comprising:
occupying unlicensed band resource (101); and
sending information corresponding to a transmission direction of a transmission unit within a maximum channel occupancy time, MCOT, to a terminal on one available transmission unit after occupying the unlicensed band resource (102), wherein the information comprises indication information of the transmission direction, wherein the indication information of the transmission direction comprises at least one of uplink, downlink or unknown;
wherein, the transmission units are symbols within the MCOT, and the available transmission unit is the first symbol within the MCOT;
wherein said sending information corresponding to the transmission direction of the transmission unit within the MCOT to the terminal on one available transmission unit after occupying the unlicensed band resource (102) comprises:
sending a downlink control signaling to the terminal on the first symbol within the MCOT after occupying the unlicensed band resource (103), the indication information of the transmission direction being carried by the downlink control signaling;
wherein the method further comprises:
sending first detection configuration information of the downlink control signaling to the terminal (104), wherein the first detection configuration information comprises an aggregation level of the downlink control signaling.

2. The method of claim 1, wherein the information comprises second detection configuration information, and said sending the information corresponding to the transmission direction of the transmission unit within the MCOT to the terminal on one available transmission unit after occupying the unlicensed band resource (102) comprises:
sending the second detection configuration information to the terminal on the first symbol after occupying the unlicensed band resource (108), wherein the second detection configuration information is configured to instruct the terminal to detect the indication information of the transmission direction of the transmission unit on the unlicensed band resource.

3. The method of claim 2, wherein
the indication information of the transmission directions is carried by a preset signal sequence,
and the second detection configuration information comprises a period of detecting the preset signal sequence and/or a position of the preset signal sequence in the unlicensed band resource.

4. A method for determining a transmission direction of a transmission unit, applied to a terminal, comprising:
receiving information corresponding to a transmission direction of a transmission unit within a maximum channel occupancy time, MCOT, sent by a network side device (501), wherein the information is sent by the network side device on one available transmission unit after occupying unlicensed band resource; and
determining the transmission direction of the transmission unit within the MCOT according to the information (502); wherein the information comprises indication information of the transmission direction, wherein the indication information of the transmission direction comprises at least one of uplink, downlink or unknown;
wherein, the transmission units are symbols within the MCOT, and the available transmission unit is the first symbol within the MCOT;
wherein said receiving the information corresponding to the transmission direction of the transmission unit within the MCOT sent by the network side device (501) comprises:
receiving a downlink control signaling sent by the network side device on the first symbol within the MCOT after occupying the unlicensed band resource (503), the indication information of the transmission direction being carried by the downlink control signaling ;
wherein the method further comprises:
obtaining first detection configuration information of the downlink control signaling (504), wherein the first detection configuration information comprises an aggregation level of the downlink control signaling.

5. The method of claim 4, wherein the information comprises second detection configuration information, and said receiving the information corresponding to the transmission direction of the transmission unit within the MCOT sent by the network side device (501) comprises:
receiving the second detection configuration information sent by the network side device (508), wherein the second detection configuration information is configured to instruct the terminal to detect the indication information of the transmission direction on the unlicensed band resource; and
detecting the indication information of the transmission direction on the unlicensed band resource according to the second detection configuration information (509).

6. The method of claim 5, wherein the indication information of the transmission direction is carried by a preset signal sequence, and the second detection configuration information comprises a period of detecting the preset signal sequence and/or a position of the preset signal sequence in the unlicensed band resource.

7. A device for indicating a transmission direction of a transmission unit, comprising:
a processor;
a memory configured to store instructions executable by the processor;
wherein the processor is configured to perform the method of any of claims 1-3 or the method of any of claims 4-6 by executing the instructions stored in the memory.

## Patentansprüche

1. Verfahren zum Anzeigen einer Übertragungsrichtung einer Übertragungseinheit, angewendet auf eine netzwerkseitige Vorrichtung, umfassend:
Belegen von unlizenziertem Bandressourcen (101); und
Senden von Informationen, die einer Übertragungsrichtung einer Übertragungseinheit innerhalb einer maximalen Kanalbelegungszeit, MCOT, entsprechen, an ein Endgerät auf einer verfügbaren Übertragungseinheit nach dem Belegen der unlizenzierten Bandressourcen (102), wobei die Informationen Anzeigeinformationen der Übertragungsrichtungen umfassen, wobei die Anzeigeinformationen der Übertragungsrichtungen mindestens eines von Uplink, Downlink oder unbekannt umfassen;
wobei die Übertragungseinheiten Symbole innerhalb der MCOT sind und die verfügbare Übertragungseinheit das erste Symbol innerhalb der MCOT ist;
wobei das Senden von Informationen, die der Übertragungsrichtung der Übertragungseinheit innerhalb der MCOT entsprechen, an das Endgerät auf einer verfügbaren Übertragungseinheit nach dem Belegen der unlizenzierten Bandressourcen (102) umfasst:
Senden einer Downlink-Steuersignalisierung an das Endgerät auf dem ersten Symbol innerhalb der MCOT nach dem Belegen der unlizenzierten Bandressourcen (103), wobei die Anzeigeinformationen der Übertragungsrichtung durch die Downlink-Steuersignalisierung getragen werden;
wobei das Verfahren ferner umfasst:
Senden von ersten Detektionskonfigurationsinformationen der Downlink-Steuersignalisierung an das Endgerät (104), wobei die ersten Detektionskonfigurationsinformationen ein Aggregationsniveau der Downlink-Steuersignalisierung umfassen.

2. Verfahren nach Anspruch 1, wobei die Informationen zweite Detektionskonfigurationsinformationen umfassen und das Senden der Informationen, die der Übertragungsrichtung der Übertragungseinheit innerhalb der MCOT entsprechen, an das Endgerät auf einer verfügbaren Übertragungseinheit nach dem Belegen der unlizenzierten Bandressourcen (102) umfasst:
Senden der zweiten Detektionskonfigurationsinformationen an das Endgerät auf dem ersten Symbol nach dem Belegen der unlizenzierten Bandressourcen (108), wobei die zweiten Detektionskonfigurationsinformationen konfiguriert sind, um das Endgerät anzuweisen, die Anzeigeinformationen der Übertragungsrichtung der Übertragungseinheit auf den unlizenzierten Bandressourcen zu detektieren.

3. Verfahren nach Anspruch 2, wobei
die Anzeigeinformationen der Übertragungsrichtungen durch eine voreingestellte Signalsequenz getragen werden und die zweiten Detektionskonfigurationsinformationen eine Periode zum Detektieren der voreingestellten Signalsequenz und/oder eine Position der voreingestellten Signalsequenz in den unlizenzierten Bandressourcen umfassen.

4. Verfahren zum Bestimmen einer Übertragungsrichtung einer Übertragungseinheit, angewendet auf ein Endgerät, umfassend:
Empfangen von Informationen, die einer Übertragungsrichtung einer Übertragungseinheit innerhalb einer maximalen Kanalbelegungszeit, MCOT, entsprechen, gesendet von einer netzwerkseitigen Vorrichtung (501), wobei die Informationen von der netzwerkseitigen Vorrichtung auf einer verfügbaren Übertragungseinheit nach dem Belegen von unlizenzierten Bandressourcen gesendet werden; und
Bestimmen der Übertragungsrichtung der Übertragungseinheit innerhalb der MCOT gemäß den Informationen (502); wobei die Informationen Anzeigeinformationen der Übertragungsrichtung umfassen, wobei die Anzeigeinformationen der Übertragungsrichtung mindestens eines von Uplink, Downlink oder unbekannt umfassen;
wobei die Übertragungseinheiten Symbole innerhalb der MCOT sind und die verfügbare Übertragungseinheit das erste Symbol innerhalb der MCOT ist;
wobei das Empfangen der Informationen, die der Übertragungsrichtung der Übertragungseinheit innerhalb der MCOT entsprechen, gesendet von der netzwerkseitigen Vorrichtung (501), umfasst:
Empfangen einer Downlink-Steuersignalisierung, gesendet von der netzwerkseitigen Vorrichtung auf dem ersten Symbol innerhalb der MCOT nach dem Belegen der unlizenzierten Bandressourcen (503), wobei die Anzeigeinformationen der Übertragungsrichtung durch die Downlink-Steuersignalisierung getragen werden;
wobei das Verfahren ferner umfasst:
Erhalten von ersten Detektionskonfigurationsinformationen der Downlink-Steuersignalisierung (504), wobei die ersten Detektionskonfigurationsinformationen ein Aggregationsniveau der Downlink-Steuersignalisierung umfassen.

5. Verfahren nach Anspruch 4, wobei die Informationen zweite Detektionskonfigurationsinformationen umfassen und das Empfangen der Informationen, die der Übertragungsrichtung der Übertragungseinheit innerhalb der MCOT entsprechen, gesendet von der netzwerkseitigen Vorrichtung (501), umfasst:
Empfangen der zweiten Detektionskonfigurationsinformationen, gesendet von der netzwerkseitigen Vorrichtung (508), wobei die zweiten Detektionskonfigurationsinformationen konfiguriert sind, um das Endgerät anzuweisen, die Anzeigeinformationen der Übertragungsrichtung auf den unlizenzierten Bandressourcen zu detektieren; und
Detektieren der Anzeigeinformationen der Übertragungsrichtung auf den unlizenzierten Bandressourcen gemäß den zweiten Detektionskonfigurationsinformationen (509).

6. Verfahren nach Anspruch 5, wobei die Anzeigeinformationen der Übertragungsrichtung durch eine voreingestellte Signalsequenz getragen werden und die zweiten Detektionskonfigurationsinformationen eine Periode zum Detektieren der voreingestellten Signalsequenz und/oder eine Position der voreingestellten Signalsequenz in den unlizenzierten Bandressourcen umfassen.

7. Vorrichtung zum Anzeigen einer Übertragungsrichtung einer Übertragungseinheit, umfassend:
einen Prozessor;
einen Speicher, konfiguriert zum Speichern von durch den Prozessor ausführbaren Anweisungen;
wobei der Prozessor konfiguriert ist, um durch Ausführen der im Speicher gespeicherten Anweisungen das Verfahren nach einem der Ansprüche 1-3 oder das Verfahren nach einem der Ansprüche 4-6 durchzuführen.

## Revendications

1. Procédé pour indiquer une direction de transmission d'une unité de transmission, appliqué à un dispositif côté réseau, comprenant :
l'occupation de ressources de bande non licenciée (101) ;
et l'envoi d'informations correspondant à une direction de transmission d'une unité de transmission dans un temps maximal d'occupation de canal, MCOT, à un terminal sur une unité de transmission disponible après l'occupation des ressources de bande non licenciée (102), les informations comprenant des informations d'indication des directions de transmission, les informations d'indication des directions de transmission comprenant au moins l'une parmi liaison montante, liaison descendante ou inconnue ;
dans lequel les unités de transmission sont des symboles dans le MCOT, et l'unité de transmission disponible est le premier symbole dans le MCOT ;
dans lequel ledit envoi d'informations correspondant à la direction de transmission de l'unité de transmission dans le MCOT au terminal sur une unité de transmission disponible après l'occupation des ressources de bande non licenciée (102) comprend :
l'envoi d'une signalisation de contrôle de liaison descendante au terminal sur le premier symbole dans le MCOT après l'occupation des ressources de bande non licenciée (103), les informations d'indication de la direction de transmission étant portées par la signalisation de contrôle de liaison descendante ;
le procédé comprenant en outre :
l'envoi de premières informations de configuration de détection de la signalisation de contrôle de liaison descendante au terminal (104), les premières informations de configuration de détection comprenant un niveau d'agrégation de la signalisation de contrôle de liaison descendante.

2. Procédé selon la revendication 1, dans lequel les informations comprennent des secondes informations de configuration de détection, et ledit envoi des informations correspondant à la direction de transmission de l'unité de transmission dans le MCOT au terminal sur une unité de transmission disponible après l'occupation des ressources de bande non licenciée (102) comprend :
l'envoi des secondes informations de configuration de détection au terminal sur le premier symbole après l'occupation des ressources de bande non licenciée (108), les secondes informations de configuration de détection étant configurées pour instruire le terminal de détecter les informations d'indication de la direction de transmission de l'unité de transmission sur les ressources de bande non licenciée.

3. Procédé selon la revendication 2, dans lequel
les informations d'indication des directions de transmission sont portées par une séquence de signaux prédéfinie, et les secondes informations de configuration de détection comprennent une période de détection de la séquence de signaux prédéfinie et/ou une position de la séquence de signaux prédéfinie dans les ressources de bande non licenciée.

4. Procédé pour déterminer une direction de transmission d'une unité de transmission, appliqué à un terminal, comprenant :
la réception d'informations correspondant à une direction de transmission d'une unité de transmission dans un temps maximal d'occupation de canal, MCOT, envoyées par un dispositif côté réseau (501), les informations étant envoyées par le dispositif côté réseau sur une unité de transmission disponible après l'occupation de ressources de bande non licenciée ; et
la détermination de la direction de transmission de l'unité de transmission dans le MCOT selon les informations (502) ; les informations comprenant des informations d'indication de la direction de transmission, les informations d'indication de la direction de transmission comprenant au moins l'une parmi liaison montante, liaison descendante ou inconnue ;
dans lequel les unités de transmission sont des symboles dans le MCOT, et l'unité de transmission disponible est le premier symbole dans le MCOT ;
dans lequel ladite réception des informations correspondant à la direction de transmission de l'unité de transmission dans le MCOT envoyées par le dispositif côté réseau (501) comprend :
la réception d'une signalisation de contrôle de liaison descendante envoyée par le dispositif côté réseau sur le premier symbole dans le MCOT après l'occupation des ressources de bande non licenciée (503), les informations d'indication de la direction de transmission étant portées par la signalisation de contrôle de liaison descendante ;
le procédé comprenant en outre :
l'obtention de premières informations de configuration de détection de la signalisation de contrôle de liaison descendante (504), les premières informations de configuration de détection comprenant un niveau d'agrégation de la signalisation de contrôle de liaison descendante.

5. Procédé selon la revendication 4, dans lequel les informations comprennent des secondes informations de configuration de détection, et ladite réception des informations correspondant à la direction de transmission de l'unité de transmission dans le MCOT envoyées par le dispositif côté réseau (501) comprend :
la réception des secondes informations de configuration de détection envoyées par le dispositif côté réseau (508), les secondes informations de configuration de détection étant configurées pour instruire le terminal de détecter les informations d'indication de la direction de transmission sur les ressources de bande non licenciée ; et
la détection des informations d'indication de la direction de transmission sur les ressources de bande non licenciée selon les secondes informations de configuration de détection (509).

6. Procédé selon la revendication 5, dans lequel les informations d'indication de la direction de transmission sont portées par une séquence de signaux prédéfinie, et les secondes informations de configuration de détection comprennent une période de détection de la séquence de signaux prédéfinie et/ou une position de la séquence de signaux prédéfinie dans les ressources de bande non licenciée.

7. Dispositif pour indiquer une direction de transmission d'une unité de transmission, comprenant :
un processeur ;
une mémoire configurée pour stocker des instructions exécutables par le processeur ;
dans lequel le processeur est configuré pour exécuter le procédé selon l'une quelconque des revendications 1 à 3 ou le procédé selon l'une quelconque des revendications 4 à 6 en exécutant les instructions stockées dans la mémoire.
